# EUROPEAN PATENT SPECIFICATION

(11) **EP 2 833 346 B1**
(45) Date of publication and mention of the grant of the patent: **14.02.2018**
(21) Application number: 14178719.2
(22) Date of filing: 28.07.2014
(51) Int. Cl.: G09F 15/02, G09F 1/10, G09F 7/18

(54) **Coated object**
Beschichtete Gegenstand
Objet enduit

(30) Priority: 29.07.2013 GB 201313510
(43) Date of publication of application: 04.02.2015
(73) Proprietor: AUGUSTUS MARTIN LIMITED, London E3 3PB (GB)
(72) Inventor: Pattison, Daniel, London, E3 3PB (GB); Stokes, Glyn, London, E3 3PB (GB); Barrow, Lascelle, London, E3 3PB (GB)
(74) Representative: Hanson, William Bennett

(56) References cited:
- FR-A1- 2 459 520
- JP-A- 2006 292 158
- JP-A- 2010 229 247
- JP-A- 2012 179 838
- US-A1- 2004 001 944

## Description

### Background to the Invention

This invention relates to a method of temporarily attaching an object, such as a graphic display sheet, having a micro vacuum receptor layer, to a wall.

Micro suction materials are known. For example, YUPOTako ®, described at https://www.antalis.co.uk/mediashare/g4media/pdf/TS_EN_YUPO_TAKO _00_21062013.PDF, can be provided in the form of a printed poster, banner or label having a micro suction layer including microscopic voids that will adhere to a smooth surface such as a window or a suitably coated or clad wall. See also US 2004/001944 A1.

REGABOND-S, from Exel Trading Co., Ltd, is a temporary fixation material that can be supplied as a tape. A micro suction layer and an adhesive layer are provided on opposite sides of a tape.

Micro suction layers provide an efficient temporary attachment to smooth, flat, clean surfaces, e.g. of glass or metal. They do not adhere to rougher surfaces, such as uncoated paper or card.

JP 2006-292158 A describes attaching a calendar of coated paper to a micro suction layer, without specifying the nature of the coating.

### Summary of the Invention

From one aspect, the invention provides a method of temporarily attaching an object to a wall, according to claim 1.

The object may be a graphic display sheet, having a printed display side, the micro vacuum receptor layer being applied to an opposite side.

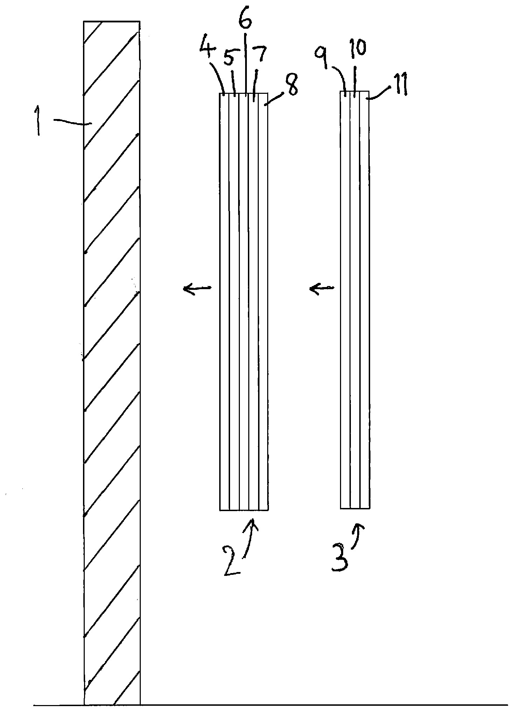

### Brief Description of the Drawing

The invention will now be described in more detail, by way of example only, with reference to the accompanying drawing, the single figure of which is a schematic sectional view of a graphic display assembly including a graphic display sheet being attached to a wall according to an embodiment of the invention.

### Detailed Description of Particular Embodiments

The drawing shows a wall 1, a display substrate 2 for attachment to the wall, and a graphic display sheet 3 according to the present invention, for removable attachment to the display substrate.

The display substrate 2 and graphic display sheet 3 comprise layers etc. 4 to 11. The thicknesses of these are exaggerated in the drawings and are depicted as the same, whereas in reality some of the thicknesses differ by orders of magnitude.

The display substrate 2 is comprises a base layer 6, such as a sheet of paper, card or plastics. A rear side of the base layer 6 bears a layer 5 of permanent, semi-permanent or removable adhesive. The adhesive layer 5 is protected by a release paper 4 which is removed before applying the substrate 2 to the wall 1.

The opposite, i.e. front, side, of the base layer 6 carries a micro suction coating 7. This polymeric layer, including microscopic voids or apertures, is protected by a low adhesion release paper 8.

The graphic display sheet 3 of the invention comprises a base material 10 of widely available paper, card or printable synthetic material. A rear side of the base material is formed at least partially with a smooth surface to provide a micro vacuum receptor 9. In particular, the micro vacuum receptor is high gloss, silicone free, polyester-based varnish 9 that can be tinted or clear and can be applied in a pattern or as a flood coating.

An image, message or other indicia 11 is printed on a visible side of the base material 10.

After fixing the display substrate 2 to the wall 1, and removing the external release paper 8, the graphic display sheet 3 is applied to the display substrate. As the micro vacuum receptor 9 is pressed against the micro suction coating 7, air is expelled from the microscopic voids in the latter, forming a vacuum which keeps the graphic display sheet 3 in place until it is to be replaced.

The micro vacuum receptor 9 improves the attraction between the micro suction coating 7 and the graphic display sheet 3. It creates an air-tight seal between the display substrate 2 and the graphic display sheet, ensuring that they remain in contact; use of paper without a micro vacuum receptor could allow air and/or moisture to enter the contact area and break the seal. Thus, different materials can be used as the base material 10, their adhesion to the display substrate 2 being normalised by the micro vacuum receptor 9.

Also, the micro vacuum receptor 9 prevents the deposition of paper or synthetic fibres from the base material 10 on the micro suction coating 7. Such fibres could otherwise remain on the coating 7 and significantly reduce the efficiency of the adhesion over multiple changes of graphic display sheet 3, ultimately preventing the creation of a seal.

Paper may have a surface preparation including calcium and wax. Synthetic sheets may similarly be coated with waxes, silicones and/or plasticisers. If these chemical coatings repeatedly come into contact with a micro vacuum material such as the micro vacuum coating 7, they can reduce its adhesion and impair or destroy its sealing capability. However, such coated papers and plastics can be used as the base material 10 in the invention, because the micro vacuum receptor 9 forms a barrier so that the chemical coatings will not reach the micro vacuum coating 7.

A further advantage of the micro vacuum receptor 9 is that it stabilises thinner base materials 10 by countering surface tension when the indicia 11 are printed on the graphic display sheet 3.

When used in such a system, the invention allows a frequent change of wall mounted display material without changing the method of attachment. It can be reused many more times than adhesive based systems. As the graphic display sheet 10 can be based on paper, it is environmentally sensitive. Finally, the system does not require the disposal of any suspension system or attachment means when the display is changed.

Whilst the display substrate particularly described above is attached to the wall with adhesive, it could alternatively be screwed, stapled or pinned to the wall.

In the present invention, the varnish described above can alternatively be applied to a flat surface of an object other than a graphic display sheet. This could be a container that requires replacing or refilling; an element of a child's toy; a fastener, e.g. for a garment, or any other feasible object that requires temporary fixation to a wall. For the purpose of the invention, the wall is provided with a micro suction layer.

## Claims

1. A method of temporarily attaching an object to a wall, comprising attaching a micro suction layer to the wall, applying a glossy, silicone free, polyester-based varnish to at least one flat surface of the object, to provide a micro vacuum receptor layer, and attaching the object to the micro suction layer using the micro vacuum receptor layer.

2. An method according to claim 1, wherein the object is a graphic display sheet (3) having a printed display side, the method comprising applying the micro vacuum receptor layer (7) to a side of the graphic display sheet (3) opposite the printed display side.

## Patentansprüche

1. Verfahren zur vorübergehenden Befestigung eines Objekts an einer Wand umfassend:
Befestigen einer Mikrosauglage an der Wand,
Aufbringen eines glänzenden, silikonfreien, Polyester-basierten Lacks auf wenigstens eine ebene Oberfläche des Objekts, zur Bereitstellung einer Mikrosaugrezeptorlage und
Befestigen des Objekts an der Mikrosauglage mittels der Mikrosaugrezeptorlage.

2. Verfahren nach Anspruch 1, worin das Objekt ein eine bedruckte Anzeigeseite aufweisendes grafisches Anzeigeblatt oder eine grafische Anzeigetafel (3) ist, wobei das Verfahren das Aufbringen der Mikrosaugrezeptorlage (7) auf eine Seite des grafischen Anzeigeblatts oder der grafischen Anzeigetafel (3) umfasst, die der bedruckten Anzeigeseite gegenüber liegt.

## Revendications

1. Procédé de fixation temporaire d'un objet à une paroi, comprenant le fait de fixer une couche de micro-succion à la paroi, le fait d'appliquer un vernis à base de polyester sans silicone brillant sur au moins une surface plane de l'objet, pour fournir une couche réceptrice de micro-vide, et le fait de fixer l'objet à la couche de micro-succion en utilisant la couche réceptrice de micro-vide.

2. Procédé selon la revendication 1, dans lequel l'objet est une feuille d'affichage graphique (3) ayant une face d'affichage imprimée, le procédé comprenant le fait d'appliquer la couche réceptrice de micro-vide (7) sur une face de la feuille d'affichage graphique (3) opposée à la face d'affichage imprimée.
